(19) Europäisches Patentamt
European Patent Office
Office européen des brevets

(11) EP 4 779 289 A1

(12) **EUROPEAN PATENT APPLICATION**
published in accordance with Art. 153(4) EPC

(43) Date of publication:
**22.07.2026 Bulletin 2026/30**

(21) Application number: **24882075.5**

(22) Date of filing: **19.09.2024**

(51) International Patent Classification (IPC):
*G01N 15/0227* [(2024.01)]

(52) Cooperative Patent Classification (CPC):
**G01N 15/0227**

(86) International application number:
**PCT/JP2024/033512**

(87) International publication number:
**WO 2025/088958 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.10.2023 JP 2023183114**

(71) Applicant: **Hitachi High-Tech Corporation**
**Minato-ku**
**Tokyo 105-6409 (JP)**

(72) Inventors:
• **MINEMURA, Hiroyuki**
**Tokyo 100-8280 (JP)**
• **TAMURA, Yumiko**
**Tokyo 100-8280 (JP)**

(74) Representative: **Strehl & Partner mbB**
**Maximilianstrasse 54**
**80538 München (DE)**

(54) **PARTICLE MEASURING DEVICE AND PARTICLE MEASURING METHOD**

(57)    An object of the invention is to provide a technique capable of measuring a particle size by using a nonlinear detection signal from a Rayleigh scattering region to a Mie scattering region, in which calibration for reducing a tool-to-tool variation between a plurality of devices is simple. A particle measuring device according to the invention acquires a normalized signal S obtained by dividing a maximum value of an interference signal generated by interference between signal light and reference light by a reference value, and measures a size of a particle using a function describing a relationship between S and (d - d0), where d is the size of the particle and d0 is a measurement lower limit value of the size of the particle (see FIG. 2A).

FIG. 2A

EP 4 779 289 A1

## Description

Technical Field

The present invention relates to a technique for measuring a size of a particle in a solvent using light.

Background Art

In recent years, the focus of drug development has been shifting from small molecule drugs to biopharmaceuticals. The biopharmaceuticals are polymers and are prone to aggregate, which can cause toxicity. For example, the US Food and Drug Administration and other organizations are trying to strengthen regulations governing the concentration of aggregates. Therefore, there is a need for a technique for quantitatively measuring a size distribution of aggregates in a submicron region of 0.1 $\mu$m to 1 $\mu$m at a desired density. Protein aggregates float in a solvent, and positions thereof change over time due to Brownian motion. In the invention, a technique for measuring a size and a density of standard particles such as a protein aggregate and a polystyrene bead will be described below. These objects are collectively referred to as a "particle".

PTL 1 discloses a technique for detecting a particle using optical measurement. PTL 1 discloses "An optical measurement method for converging light to generate a light spot and measuring an object having a size equal to or smaller than about three times a size of the light spot, the method including: a signal acquisition step of detecting reflected light reflected from the object by irradiating the object while moving a focal position of the light in an optic axis direction at least; a step of acquiring correspondence relationship data in which a correspondence relationship between an intensity of the reflected light and a size of the object is described; and a size calculation step of acquiring the size of the object by referring to the correspondence relationship data using the intensity of the reflected light" (claim 1). The technique disclosed in PTL 1 can implement high-resolution measurement without the need for preprocessing by signal enhancement by interfering the reflected light with reference light.

PTL 2 discloses a technique in which, by physically scanning an objective lens and receiving interference between signal light and interference light using four detectors with different phase conditions, it is unnecessary to adjust a phase of reference light by mirror scanning in time domain optical coherence tomography (OCT). Further, PTL 2 discloses a technique for speeding up scanning of a light spot based on the technique in PTL 1 so as not to be affected by movement of a particle undergoing Brownian motion in a liquid.

PTL 3 discloses a technique in which, in measurement of a biological tomographic image using a semiconductor laser as a light source, a coherence length is controlled within a predetermined range by superimposing a radio frequency on a drive current, thereby reducing an influence of noise contained in the acquired tomographic image.

Citation List

Patent Literature

  PTL 1: JP2017-102032A
  PTL 2: WO2020/144754
  PTL 3: JP2015-049204A

Summary of Invention

Technical Problem

In the techniques disclosed in PTL 1 and PTL 2 based thereon, correspondence relationship data between a particle size and a maximum detection signal obtained at a focal position is acquired in advance, and thus the particle size can be obtained from the measured maximum detection signal. Further, a particle density can be obtained based on the number of detected particles. On the other hand, when performance management is performed by reducing tool-to-tool variations between a plurality of devices of the same product type, it is inevitable that variations occur in characteristics of individual components represented by, for example, a light emission angle and current sensitivity of a semiconductor laser and sensitivity of a photodetector. According to PTL 1 and PTL 2, it is necessary to individually acquire the above-described correspondence relationship data for a plurality of devices. This is a complicated operation, resulting in an increase in manufacturing cost of the device.

The correspondence relationship data described in PTL 1 has a linear relationship as illustrated in FIG. 17 in PTL 1. When such a linear relationship is used, a non-linear characteristic change from a Rayleigh scattering region to a Mie scattering region cannot be handled.

The invention has been made in view of the above problems, and an object of the invention is to provide a technique capable of measuring a particle size by using a non-linear detection signal from a Rayleigh scattering region to a Mie scattering region, in which calibration for reducing a tool-to-tool variation between a plurality of devices is simple.

Solution to Problem

A particle measuring device according to the invention acquires a normalized signal S obtained by dividing a maximum value of an interference signal generated by interference between signal light and reference light by a reference value, and measures a size of a particle using a function describing a relationship between S and $(d - d0)$, where $d$ is the size of the particle and $d0$ is a measurement lower limit value of the size of the particle.

Advantageous Effects of Invention

According to the particle measuring device of the invention, in the particle measuring device that measures a size of a particle contained in a sample of a liquid, it is possible to reduce the tool-to-tool variation of the product, and it is possible to implement particle size measurement in a wider size range than the related art. Problems, configurations, and effects other than those described above will become apparent by description of the following embodiments.

Brief Description of Drawings

[FIG. 1] FIG. 1 is a schematic diagram showing a relationship between a defocus and a detection signal in PTL 1 and PTL 2.

[FIG. 2A] FIG. 2A shows a simulation result obtained by calculating a relationship between a particle size and a maximum detection signal using an interference detection optical system described in PTL 1 and PTL 2.

[FIG. 2B] FIG. 2B is obtained by adding background scattering to the simulation result in FIG. 2A.

[FIG. 2C] FIG. 2C shows a case where a background scattering level is equal to an interference signal of a particle having a size of 0.10 $\mu$m.

[FIG. 3] FIG. 3 is a flowchart showing a simplified device calibration procedure provided by the invention.

[FIG. 4] FIG. 4 shows an experimental result showing a relationship between objective lens emission power and a detection signal when a particle measuring device according to the invention measures a reference sample.

[FIG. 5] FIG. 5 is a flowchart showing a procedure for obtaining a normalized signal of an evaluation sample.

[FIG. 6A] FIG. 6A shows an experimental result in which each reference sample is measured by each device for three types of emission power including standard power, and a relationship between a size of a reference particle and a normalized signal is plotted.

[FIG. 6B] FIG. 6B is an enlarged view of the experimental result in FIG. 6A.

[FIG. 7A] FIG. 7A shows a result of a model having an order of 1 among application results of a size conversion model using a polynomial of the invention.

[FIG. 7B] FIG. 7B shows a result of a model having an order of 2 among the application results of the size conversion model using the polynomial of the invention.

[FIG. 7C] FIG. 7C shows a result of a model having an order of 3 among the application results of the size conversion model using the polynomial of the invention.

[FIG. 7D] FIG. 7D shows a result of a model having an order of 4 among the application results of the size conversion model using the polynomial of the invention.

[FIG. 7E] FIG. 7E shows a result of a model having an order of 5 among the application results of the size conversion model using the polynomial of the invention.

[FIG. 7F] FIG. 7F shows a result of a model having an order of 6 among the application results of the size conversion model using the polynomial of the invention.

[FIG. 8] FIG. 8 shows an experimental result showing a relationship between the order of the size conversion model using the polynomial of the invention and an RMS error.

[FIG. 9A] FIG. 9A shows a result of a first-order lag system model among application results of a size conversion model using an exponential function of the invention.

[FIG. 9B] FIG. 9B shows a result of a second-order lag system model among the application results of the size conversion model using the exponential function formula of the invention.

[FIG. 9C] FIG. 9C shows a result of a Gaussian distribution model among the application results of the size conversion model using the exponential function of the invention.

[FIG. 10] FIG. 10 shows an experimental result showing a relationship between the size conversion model based on the exponential function formula of the invention and an RMS error.

[FIG. 11A] FIG. 11A shows RMS errors of particle sizes measured according to the related art and the invention.

[FIG. 11B] FIG. 11B shows a result of comparing a relative error of a measured size obtained by the size conversion model for 0.107 $\mu$m (a minimum size shown in FIG. 6A) between the related art and the invention.

[FIG. 12A] FIG. 12A is an experimental result showing a relationship between a $d_0/\lambda$ value and a parameter of the size conversion model.

[FIG. 12B] FIG. 12B is a numerical table showing an appropriate range of the $d_0/\lambda$ value in consideration of a case where a range of the particle size to be measured is changed by selecting a numerical aperture of an objective lens based on experimental results.

[FIG. 13] FIG. 13 is an example of a configuration diagram of a particle measuring device according to Embodiment 7.

Description of Embodiments

<Background of Invention>

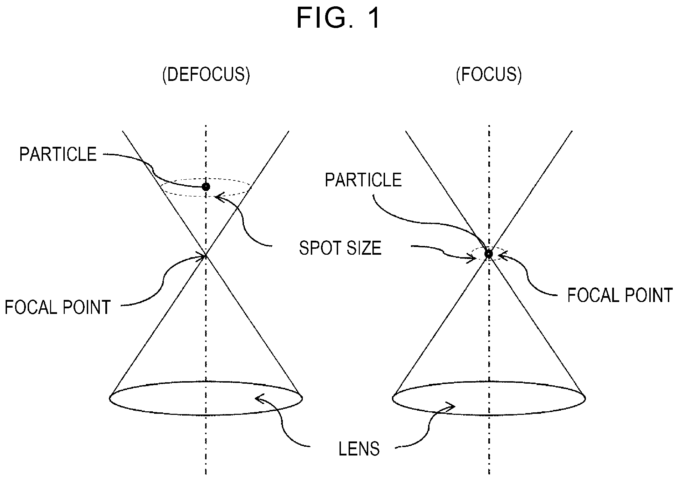

FIG. 1 is a schematic diagram showing a relationship between a defocus and a detection signal in PTL 1 and PTL 2. When an optic axis direction of an objective lens is z, a light spot diameter at the z position of a particle to be measured is determined by a wavelength of a light source, a numerical aperture of the objective lens, and a defocus amount. The amount of reflected light from the particle is approximated according to a ratio of the light spot diameter to particle area, and the detection signal increases or decreases. A left part of FIG. 1 is a schematic diagram of a state in which the particle to be measured is defocused from a focal position of the objective lens. In this case, a size of the particle is relatively small with respect to the light spot diameter, and the amount of reflected light received via the objective lens and a detection signal obtained by converting the amount of reflected light into an electric signal are relatively small. On the other hand, a right part of FIG. 1 is a schematic diagram of a state in which the particle to be measured is at the focal position of the objective lens. In this case, the size of the particle is maximized with respect to the light spot diameter, and the amount of reflected light received via the objective lens and the detection signal are maximized. FIG. 17 of PTL 1 discloses that the maximum detection signal obtained from the particle size and the focal position is uniquely determined under the condition that the size (diameter) of the target particle is approximately three times or less the minimum light spot diameter at the focal point, and that the size of the particle can be obtained from the measured maximum detection signal by acquiring correspondence relationship data in advance.

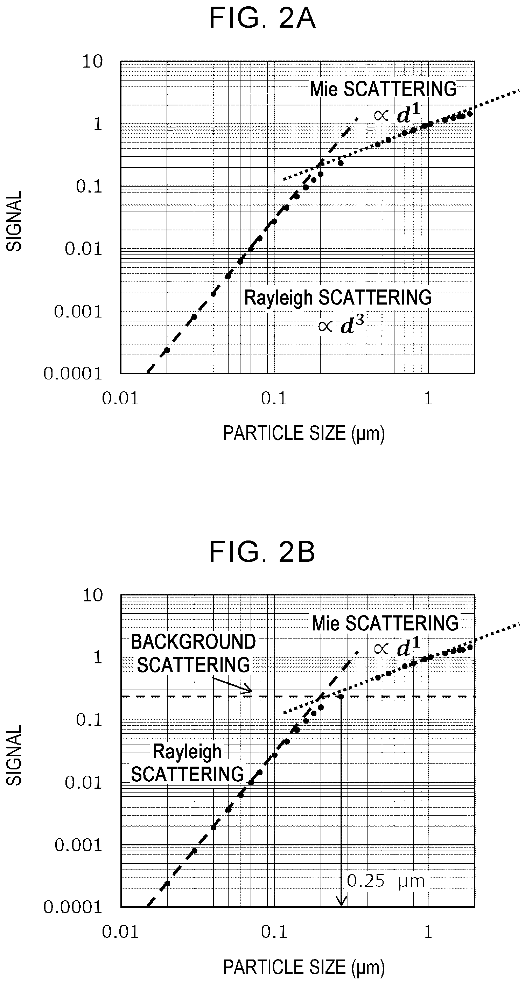

FIG. 2A shows a simulation result obtained by calculating a relationship between a particle size and a maximum detection signal using the interference detection optical system disclosed in PTL 1 and PTL 2. Here, the simulation was performed using a method combining Mie scattering and Fraunhofer diffraction. A wavelength of a light source is 785 nm, a numerical aperture of an objective lens is 0.45, a refractive index of the particles is 1.58 corresponding to commercially available polystyrene beads, and a refractive index of a solvent is 1.333 corresponding to pure water. When the particle size is d, it can be seen that the maximum detection signal is proportional to the cube of d corresponding to Rayleigh scattering in the region of d < 0.1 $\mu$m, and the maximum detection signal is proportional to the first power of d corresponding to Mie scattering in the region of d > 0.3 $\mu$m, as shown in the drawing. The linearity of the particle size and the maximum detection signal in the region of d > 0.3 $\mu$m coincides with that in FIG. 17 of PTL 1.

In order to avoid misunderstanding of the particle size dependency, further description will be provided. It is generally known that an energy intensity of scattered light in Rayleigh scattering is proportional to the sixth power of the particle size d. A magnitude of an electric signal obtained by photoelectrically converting the reflected light by a photodetector is also proportional to the sixth power of d. Optical systems described in PTL 1, PTL 2, and the invention utilize homodyne interference in which reflected light and reference light are caused to interfere with each other and amplified. In this case, since not "energy" of the reflected light but an "electric field amplitude" is converted into an electric signal, the maximum detection signal is proportional to the cube of d. By using such an optical system, a change in the magnitude of the detection signal based on the particle size is gentle as compared with the method of photoelectrically converting the "energy" of the reflected light, and as a result, it is advantageous in widening a dynamic range of the measurable particle size. When a semiconductor laser is used as the light source, it is possible to reduce laser noise mainly caused by return light by superimposing a radio frequency on a drive current by the technique disclosed in PTL 3.

When actually measuring a sample containing particles such as protein aggregates, an interference signal to be acquired contains a component caused by background scattering. The background scattering referred to in the invention is the sum of (factor 1) Rayleigh scattering from molecules such as protein molecules and surfactants in a sample and (factor 2) stray light of an optical system including reflected light from a sample container and laser noise. When a magnitude of an interference signal from the particle to be measured is smaller than the background scattering, the size of the particle cannot be measured. Therefore, the background scattering gives a particle measurement size lower limit in the techniques disclosed in PTLs 1 and 2 including the invention.

FIG. 2B is obtained by adding background scattering to the simulation result in FIG. 2A. Here, a case where a protein concentration contained in the sample is as high as about 100 mg/mL, that is, a case where the background scattering is mainly determined by (factor 1) is shown. A background scattering level (the magnitude of the interference signal) is assumed to be equal to an interference signal of a particle having a size of 0.25 $\mu$m. A measurement size lower limit for this sample is 0.25 $\mu$m, and as can be seen in the drawing, the interference signal of measurable particles is mainly Mie scattering, so the relationship between the particle size and the interference signal may be linear. This shows a case where the linear relationship shown in FIG. 17 of PTL 1 is suitable.

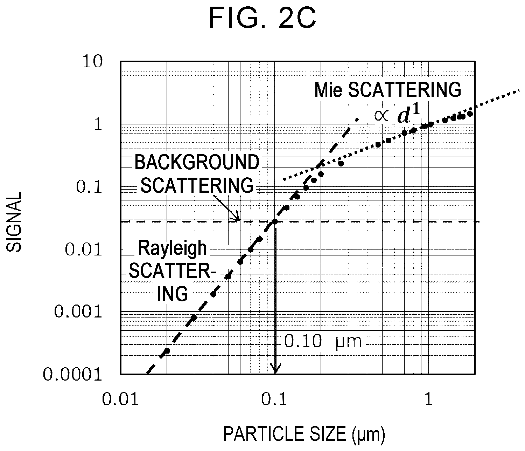

FIG. 2C shows a case where the background scattering level is equal to an interference signal of a particle having a size of 0.10 $\mu$m. This corresponds to a case where the concentration of protein molecules contained in the sample is low, or a case where measurement of a diluted sample diluted by about 1000 times is performed in order to examine an aggregate size distribution of the sample shown in FIG. 2B in detail. At this time, the background scattering is mainly determined by (factor 2). As can be seen in the drawing, since an interference signal of a measurable particle includes Rayleigh scattering in addition to Mie scattering, a relationship between a particle size and the interference signal is non-linear.

A lower limit of the particle size that can be measured by the particle measuring device according to the invention is determined by the magnitude of background scattering, and a factor thereof is determined by the sample dependent (factor 1) and the device dependent (factor 2). The magnitude of background scattering due to (factor 2) can be quantified by giving a detection size lower limit that does not depend on the protein concentration or the like, and measuring, for example, a commercially available standard polystyrene bead suspension diluted with pure water for cleanroom use as a reference sample. The magnitude of background scattering measured at this time is a value unique to the device. In addition, since the relationship between the particle size and the interference signal is non-linear in the particle measuring device in which the background scattering due to (factor 2) is reduced by improvement of the device implementation, a new size conversion model describing a relationship between the particle size and the interference signal is required instead of the linear relationship shown in FIG. 17 of PTL 1. At this time, if there is a size conversion model that describes the relationship between the particle size and the interference signal with necessary and sufficient accuracy with respect to the reference sample in which background scattering is sufficiently small (there is no Rayleigh scattering of protein molecules), as illustrated in FIGS. 2B and 2C, it is possible to correctly obtain the particle size from the interference signal within a measurable size range even for a sample in which background scattering is mainly determined by (factor 1).

In light of the problem to be solved by the invention, it should be noted that the background scattering means background scattering measured using a reference sample, that is, background scattering due to (factor 2), unless otherwise specified.

In the related art such as those disclosed in PTLs 1 and 2, it is assumed that the relationship between the particle size and the detection signal is a linear relationship. In contrast, in the invention, as shown in FIG. 2A, a region ranging from Mie scattering to Rayleigh scattering is set as a detection object. Therefore, the relationship between the particle size and the detection signal becomes non-linear with the vicinity of d = 0.2 $\mu$m to 0.3 $\mu$m as a boundary. The invention provides a technique capable of accurately detecting a particle size even in such a non-linear correspondence relationship between the particle size and a detection signal.

Hereinafter, in describing the invention, the description will be based on a coordinate system in which an optic axis direction is a z-axis. In order to simplify the description, a maximum detection signal obtained when the particle size is at a focal position of an objective lens is simply referred to as a detection signal, and a signal obtained by reducing a tool-to-tool variation is referred to as a normalized signal.

<Embodiment 1: Normalized Signal>

Here, a normalized signal for reducing a difference between a plurality of devices will be described. A normalized signal S is defined as follows. Further, s is the detection signal.

[Math. 1]

$$S = \frac{s}{s_0} \qquad \text{(Formula 1)}$$

Here, $s_0$ is a reference signal representing detection sensitivity of the device, and is defined as follows. Further, $\alpha$ is a unique sensitivity coefficient representing light use efficiency of an optical system and characteristics of a photo-detector, $\eta$ is a correction coefficient based on light emission power of a light source and a temperature condition, r is Fresnel amplitude reflectance of a particle to be measured, and $R_0$ is Fresnel amplitude reflectance of a reference particle used in device calibration. With r and $R_0$, $s_0$ can be arithmetically determined from refractive indices of the particle and a medium. In Formulas 3 and 4, $n_o$ is a refractive index of the particle to be measured, $n_s$ is a refractive index of a solvent of the particle to be measured, $N_O$ is a refractive index of a particle of a reference sample, and $N_s$ is a refractive index of a solvent of the reference sample.

[Math. 2]

$$s_0 = \alpha \cdot \eta \cdot \frac{r}{R_0} \qquad \text{(Formula 2)}$$

[Math. 3]

$$r = \frac{|n_o - n_s|}{|n_o + n_s|} \qquad \text{(Formula 3)}$$

[Math. 4]

$$R_0 = \frac{|N_O - N_S|}{|N_O + N_S|} \qquad \text{(Formula 4)}$$

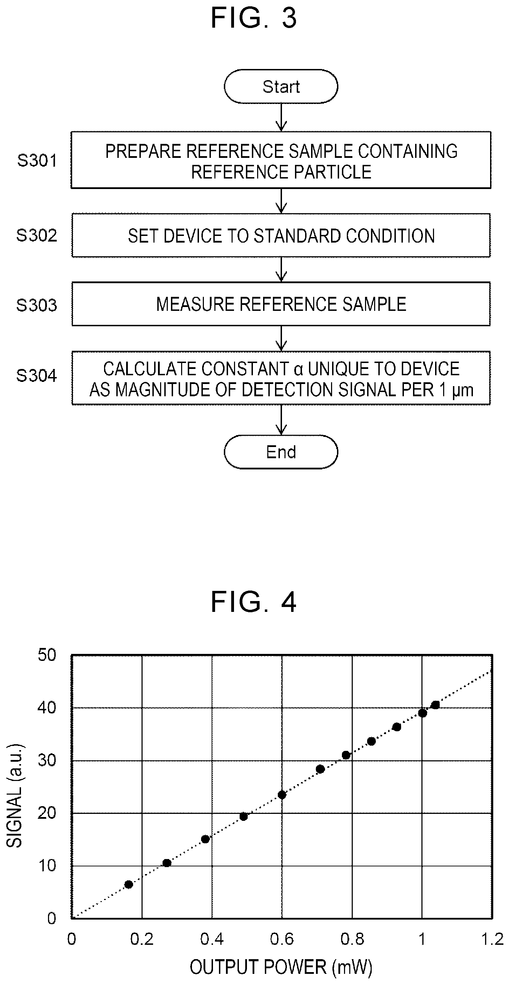

FIG. 3 is a flowchart showing a simplified device calibration procedure provided by the invention. In a sensitivity calibration procedure for reducing a difference between a plurality of devices, the detection signal is measured using a reference sample. Specifically, the following steps can be performed.

In step S301, the reference sample is prepared. As the reference sample, for example, a sample obtained by diluting a commercially available standard polystyrene bead suspension with pure water for cleanroom use and adjusting a particle density to about $10^7$ particles/mL can be used. The particle size is, for example, 1 $\mu$m. In order to ensure accuracy, it is desirable to measure the size of the particles contained in the suspension in advance with a scanning electron microscope. In this case, $R_0$ can be calculated using a known refractive index such as $N_o$=1.58 and $N_s$ = 1.333. Since the measurement object is the reference sample, $r = R_0$.

In step S302, a device to be calibrated is set to a standard condition. A light source emits light at predetermined standard light emission power such as 1 mW, and an ambient temperature is maintained at a predetermined standard ambient temperature such as 25 °C. The correction coefficient at this time can be defined as $\eta = 1$.

In step S303, the reference sample is measured by the device set to the standard condition.

In step S304, the measured detection signal s indicates a unique sensitivity coefficient such as light use efficiency of an optical system of the device and photoelectric conversion characteristics of a detector. When the particle size contained in the reference sample is $\varphi$, $\alpha = s/\varphi$ is held as the magnitude of the detection signal per 1 $\mu$m. $\alpha$ is a constant unique to the device, and is stored in a device-dependent parameter file or the like for use.

FIG. 4 shows an experimental result showing a relationship between objective lens emission power and the detection signal when the particle measuring device according to the invention described later measures the reference sample. As can be seen from the drawing, there is a proportional relationship between the objective lens emission power and the detection signal. This indicates that a characteristic based on a fundamental equation of optical interference is obtained. Therefore, the correction coefficient $\eta$ based on the light emission power of the light source and the temperature condition in Formula 2 can be described as follows.

[Math. 5]

$$\eta = \eta_T(T) \cdot \frac{P}{P_0} \qquad \text{(Formula 5)}$$

$P_0$ is emission power under the standard condition, P is emission power at the time of measurement, T is a temperature, $\eta T$ (T) is a temperature correction coefficient depending on a change in emission spectrum of a semiconductor laser according to the temperature, and in the device used, a sensitivity change is about 0.5% per 1 °C at room temperature of 25 °C. $\eta_T$ (T) can be considered to be determined according to a quantum well structure of the semiconductor laser used as a light source. Therefore, this characteristic can be treated not as a characteristic specific to the device but as a characteristic specific to a group determined by the model number or lot of a selected semiconductor laser component.

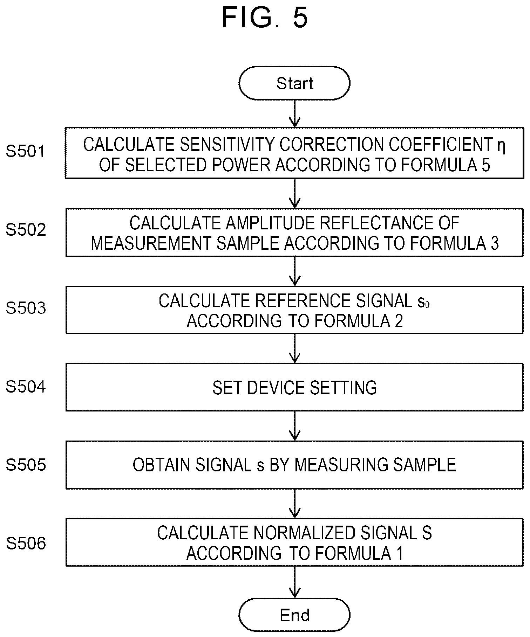

FIG. 5 is a flowchart showing a procedure for obtaining a normalized signal of an evaluation sample. A procedure for acquiring a normalized signal of the invention for an evaluation sample such as a protein aggregate of a biopharmaceutical prepared by a user will be described with reference to FIG. 5. This flowchart can be implemented by, for example, a controller or a computer attached to the measuring device.

In step S501, the correction coefficient $\eta$ is calculated from the emission power P designated by the user and an output value T of a temperature monitor mounted in the vicinity of the semiconductor laser serving as the light source according to Formula 5. At this time, when the difference between the refractive index of the particle to be measured and the refractive index of the solvent is large, the detection signal becomes large, and thus the emission power of the objective lens may be reduced in consideration of a dynamic range for size measurement and the resolution. Conversely, when the difference in refractive index is small, it is preferable to set the emission power to be large. In an actual measuring device, the convenience is improved by determining an appropriate set value of the emission power on the measuring device side corresponding to a representative measurement object, for example, a protein aggregate of a biopharmaceutical, a commercially available antibody, a virus vector, or a corona vaccine, and allowing the user to appropriately select a condition according to the measurement object.

In step S502, the Fresnel amplitude reflectance of the particle to be measured is calculated from the refractive indices of the particle and the medium contained in the evaluation sample according to Formula 3.

In step S503, the reference signal $s_0$ is calculated according to Formula 2.

In step S504, the light source and various electric stages in the device are appropriately controlled to prepare for measurement.

In step S505, in accordance with the method disclosed in PTL 2 or a method described later, the detection signal obtained while scanning the evaluation sample with a light spot is acquired to acquire three-dimensional image data, individual particles are identified based on the three-dimensional image data, and then the maximum detection signal s at a focus of each particle is acquired.

In step S506, the normalized signal S of an individual particle is obtained according to Formula 1.

<Embodiment 1: Summary>

The obtained normalized signal S follows the sensitivity coefficient $\alpha$ described above, and can be said to reflect the relationship simply shown in FIG. 17 of PTL 1 in which the detection signal and the particle size are proportional. According to the technique disclosed in PTL 1, in order to obtain the normalized signal S, it is necessary to acquire the correspondence relationship data while changing the emission power for various reference particle sizes individually for a plurality of devices. On the other hand, according to the embodiment, since the calibration can be implemented by one measurement process for the reference sample under the standard device conditions described above, the process can be significantly simplified.

<Embodiment 2: Measurement Experiment Results of Normalized Signals by Plurality of Devices>

In order to demonstrate that the non-linear size conversion model provided by the invention is applicable to a plurality of devices, four devices were prepared. Each device had a common type of semiconductor laser as a light source with a wavelength of 785 nm and an objective lens with a numerical aperture of 0.45. In addition, each device was prepared with two types of bases of the optical system, two types of scanning mirrors for the light spot, two types of stages for driving optical components and a sample stage, and two types of adjustment of the optical path length origins of reference light and signal light. A basic configuration and main components of the device will be described later.

As a reference sample for measuring the particle size dependency of the normalized signal, a plurality of samples obtained by diluting a commercially available standard polystyrene bead suspension with pure water for cleanroom use to adjust the particle density to $10^7$ particles/mL were prepared. A size of a polystyrene particle contained in each reference sample was measured with a scanning electron microscope. The prepared particle sizes are 0.107 $\mu$m, 0.160 $\mu$m, 0.216 $\mu$m, 0.551 $\mu$m, 0.995 $\mu$m, and 1.510 $\mu$m.

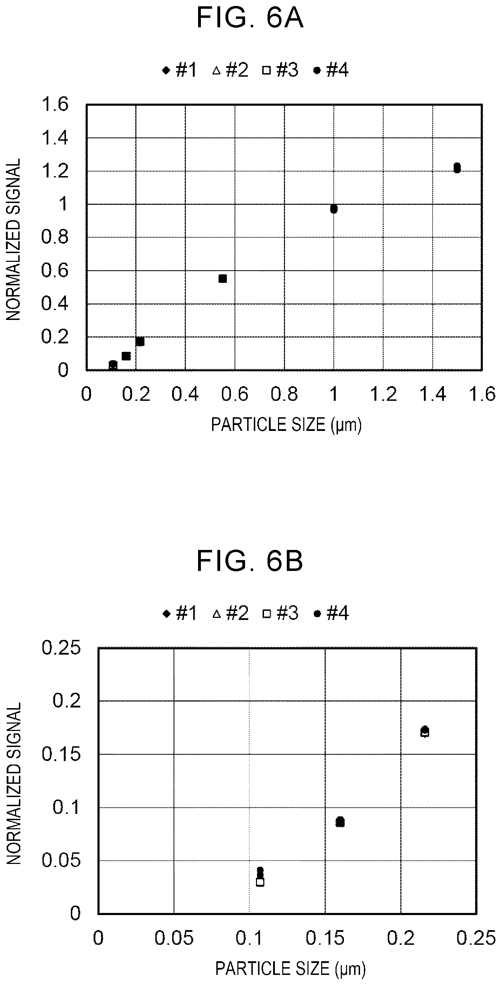

FIG. 6A shows an experimental result in which each reference sample is measured by each device for three types of emission power including standard power, and a relationship between a size of a reference particle and a normalized signal is plotted. As can be seen in the drawing, the normalized signals provided by the invention hardly vary with respect to the four devices and three types of emission power conditions, and can be measured as values determined only by the particle size.

FIG. 6B is an enlarged view of the experimental result in FIG. 6A. When the particle size was the minimum of 0.107 $\mu$m, laser noise and Brownian motion of the particles had the maximum influence, but a standard deviation of the normalized signal was 15%. The standard deviation of the particle size measuring device is preferably 10% or less.

<Embodiment 3: Case of Non-linear Size Conversion Model (1) Using Polynomial Applicable to Plurality of Devices and Introduced with Measurement Size Lower Limit>

In Embodiment 3 of the invention, a model in a polynomial form will be described as a size conversion model for obtaining a particle size from a measurement result of a normalized signal by a plurality of devices shown in Embodiment 2.

In the invention, a polynomial model is provided as a non-linear model in which a measurement size lower limit $d_0$ ($d_0 > 0$) is introduced using the normalized signal S. $d_0$ is a particle size at which an interference signal is substantially equal to background scattering. Further, since the size conversion model shown here is not unique to the device, there is an advantage over the technique disclosed in PTL 1 that the size conversion model can be commonly used for products of the same type (model numbers of the semiconductor laser and the objective lens are the same).

When the particle size obtained from the normalized signal is d, the size conversion model is defined as follows. N is the maximum order of the polynomial model, and $c_n$ is a coefficient by which the term of order n is multiplied. In Formula 6, when the normalized signal $S > 0$ and the right side is positive, the particle size d is larger than the measurement size lower limit $d_0$. Since a form in which $d_0$ is moved to the right side in Formula 6 may be easier to understand, Formula 6' is shown as a supplementary expression.

[Math. 6]

$$d - d_0 = \sum_{n=1}^{N} c_n \, S^n \qquad \text{(Formula 6)}$$

$$d = d_0 + \sum_{n=1}^{N} c_n \, S^n \qquad \text{(Formula 6')}$$

Application results of the order N = 1 to 6 of the polynomial will be described below. Here, the size conversion model of Formula 6 is applied to the result in FIG. 6A, and multivariate optimization is performed on parameters (unknowns) $d_0$ and $c_n$ using the Subplex method so that the error is minimized.

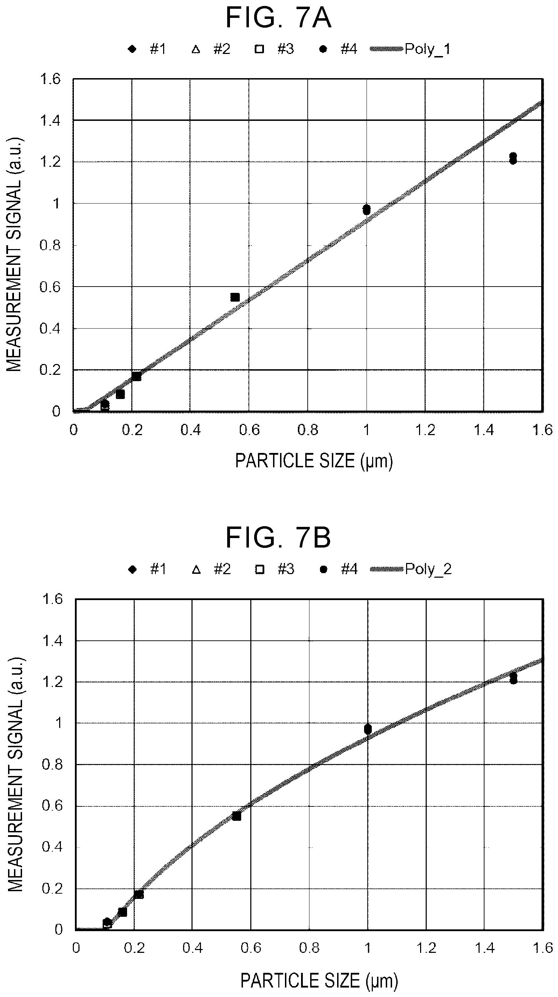

FIG. 7A shows a result of a model having an order of 1 among application results of the size conversion model using the polynomial of the invention. The parameters are $d_0$ and $c_1$, and the number of parameters is two. This model is specifically expressed by Formula 7A described later. In the drawing, plots indicate experimental results, and a straight line indicates a result of the model. As can be seen in the drawing, the error increases when the particle size is 0.2 $\mu$m or less and 1 $\mu$m or more. If this error is allowable, this model is very suitable for implementation in hardware such as an FPGA since the model is a first-order linear model.

FIG. 7B shows a result of a model having an order of 2 among the application results of the size conversion model using the polynomial of the invention. The parameters are $d_0$, $c_1$, and $c_2$, and the number of parameters is three. This model is specifically expressed by Formula 7B described later. In the drawing, plots indicate experimental results, and a curve indicates a result of the model. As can be seen in the drawing, the error between the plots and the curve is smaller than that in the case of the order 1. If the remaining error is allowable, this model is a quadratic polynomial, and thus is a model suitable for implementation in hardware such as an FPGA.

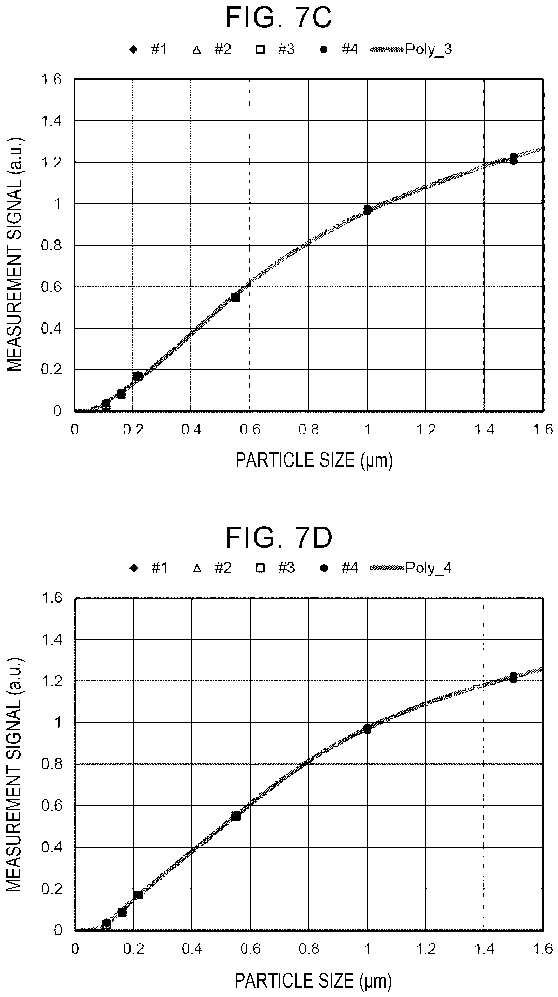

FIG. 7C shows a result of a model having an order of 3 among the application results of the size conversion model using the polynomial of the invention. The parameters are $d_0$, $c_1$, $c_2$, and $c_3$, and the number of parameters is four. This model is specifically expressed by Formula 7C described later. In the drawing, plots indicate experimental results, and a curve indicates a result of the model. As can be seen in the drawing, the error between the plots and the curve in the case where the particle size is 1 $\mu$m is significantly smaller than in the case of the order 2. If the remaining error is allowable, that is, if the error is allowable, the model is a cubic polynomial, and thus is suitable for implementation in hardware such as an FPGA.

FIG. 7D shows a result of a model having an order of 4 among the application results of the size conversion model using the polynomial of the invention. The parameters are $d_0$, $c_1$, $c_2$, $c_3$, and $c_4$, and the number of parameters is five. This model is specifically expressed by Formula 7D described later. In the drawing, plots indicate experimental results, and a curve indicates a result of the model. As shown in the drawing, a large improvement in error cannot be visually recognized as compared with the case of the order 3, but a numerical error is reduced. If a remaining error and an increase in calculation time due to an increase in the number of parameters can be allowed, this model is a fourth-order polynomial, and thus is a model relatively suitable for implementation in hardware such as an FPGA.

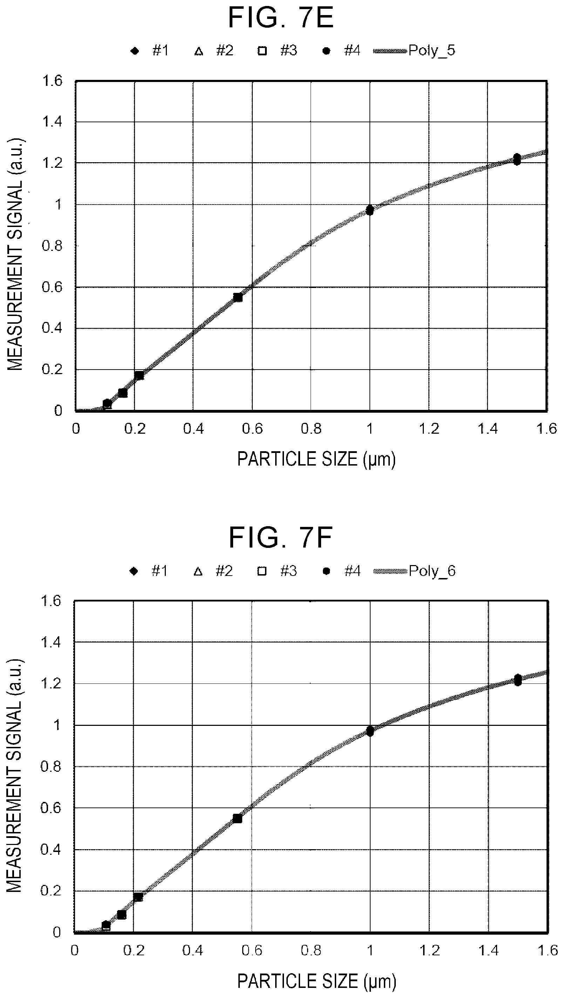

FIG. 7E shows a result of a model having an order of 5 among the application results of the size conversion model using the polynomial of the invention. The parameters are $d_0$, $c_1$, $c_2$, $c_3$, $c_4$, and $c_5$, and the number of parameters is six. This model is specifically expressed by Formula 7E described later. In the drawing, plots indicate experimental results, and a curve indicates a result of the model. As shown in the drawing, a large improvement in error cannot be visually recognized as compared with the case of the order 4, but a numerical error is reduced. If a remaining error and an increase in calculation time due to an increase in the number of parameters can be allowed, this model is a fifth-order polynomial, and thus is a model relatively suitable for implementation in hardware such as an FPGA.

FIG. 7F shows a result of a model having an order of 6 among the application results of the size conversion model using the polynomial of the invention. The parameters are $d_0$, $c_1$, $c_2$, $c_3$, $c_4$, $c_5$, and $c_6$, and the number of parameters is 7. This model is specifically expressed by Formula 7F described later. In the drawing, plots indicate experimental results, and a curve indicates a result of the model. As shown in the drawing, a large improvement in error cannot be visually recognized as compared with the case of the order 5, but a numerical error is reduced. If a remaining error and an increase in calculation time due to an increase in the number of parameters can be allowed, this model is a sixth-order polynomial, and thus is a model relatively suitable for implementation in hardware such as an FPGA.

[Math. 7]

$$d = d_0 + c_1 \, S \qquad \text{(Formula 7A)}$$

$$d = d_0 + c_1 \, S \; + c_2 \, S^2 \qquad \text{(Formula 7B)}$$

$$d = d_0 + c_1 \, S \; + c_2 \, S^2 + c_3 \, S^3 \qquad \text{(Formula 7C)}$$

$$d = d_0 + c_1 \, S \; + c_2 \, S^2 + c_3 \, S^3 + c_4 \, S^4 \qquad \text{(Formula 7D)}$$

$$d = d_0 + c_1 \, S \; + c_2 \, S^2 + c_3 \, S^3 + c_4 \, S^4 + c_5 \, S^5 \qquad \text{(Formula 7E)}$$

$$d = d_0 + c_1 \, S \; + c_2 \, S^2 + c_3 \, S^3 + c_4 \, S^4 + c_5 \, S^5 + c_6 \, S^6 \qquad \text{(Formula 7F)}$$

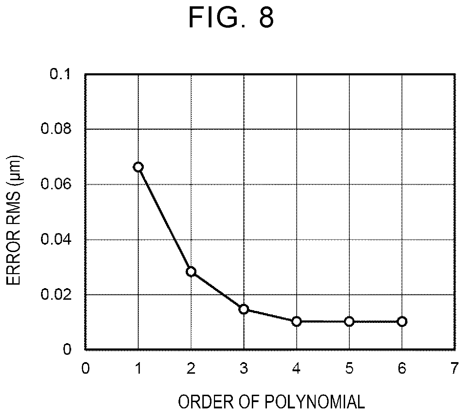

FIG. 8 shows an experimental result showing a relationship between the order of the size conversion model using the polynomial of the invention and an RMS error. In FIG. 8, a root mean square (RMS) error when the normalized signal is converted into the particle size is summarized with respect to the results shown in FIGS. 7A to 7F. As can be seen from the drawing, the RMS error decreases as the order of the polynomial increases. A range of the RMS error is from about 0.07 $\mu$m at maximum to about 0.01 $\mu$m at minimum. As the order of the polynomial increases, the calculation time increases in the case of processing by a CPU, and a circuit scale and power consumption increase in the case of implementation in hardware such as an FPGA. When utilizing the technique disclosed in the invention, it is possible to appropriately select a model that meets specifications in consideration of an error (= size measurement accuracy), a calculation time, a circuit scale, or the like.

The first-order to sixth-order polynomial models have been exemplified above. In the invention, as shown in Formula 6, for polynomial models having an order of 7 or more as well, a model suitable for a circuit scale or an accuracy specification can be selected by evaluating an RMS error or the like of a particle size converted from a normalized signal based on a model formula in a similar procedure.

<Embodiment 4: Case of Non-linear Size Conversion Model (2) Using Exponential Function Formula Applicable to Plurality of Devices and Introduced with Measurement Size Lower Limit>

In Embodiment 4 of the invention, a model in an exponential function form will be described as a size conversion model for obtaining a particle size from a measurement result of a normalized signal by a plurality of devices shown in Embodiment 2.

In the invention, an exponential function model is provided as a non-linear model in which the measurement size lower limit $d_0$ ($d_0 > 0$) is introduced using the normalized signal S. $d_0$ is the particle size at which the interference signal is substantially equal to the background scattering. Further, the size conversion model shown here is not unique to the device, and has an advantage over the technique disclosed in PTL 1 that the size conversion model can be commonly used for products of the same type (model numbers of the semiconductor laser and the objective lens are the same). At the same time, the following model has a relatively small number of parameters of 3, and has a feature that the physical meaning of each parameter can be easily grasped as compared with the above-described polynomial models. In this regard, for example, when the wavelength of the light source or the numerical aperture of the objective lens is changed to achieve high resolution in a device of the second generation as compared with a device of the first generation, the size conversion model can be easily managed.

In consideration of a fact that an intensity distribution of a light spot is approximated by a Gaussian distribution, a fact that reflected light from a target particle is interference-amplified by a homodyne optical circuit to be described later and converted into a detection signal as an electric signal corresponding to an electric field amplitude proportional to the 1/2 power of the light intensity, and a fact that reflected light from a particle equal to or larger than the light spot size is saturated by the size effect, three size conversion models will be described below. These models are a basic first-order lag system model, and its advanced forms, that is, a second-order lag system model and a Gaussian distribution model. For the derivation of each parameter, multivariate optimization processing was performed using the Subplex method based on the result in FIG. 6A so as to minimize the error.

(1) First-order Lag System Model

To facilitate understanding, a model representing the normalized signal S obtained when the particle size d is given is shown in Formula 8. $d_0$ (> 0) represents a particle size at which the interference signal is substantially equal to the background scattering, D (> 0) represents a light spot size constant representing saturation of the normalized signal by the size of the light spot, and A (> 0) represents a constant representing the magnitude of a saturation signal. Since each of these parameters has a physical meaning, for example, in a case where a device having a light spot size of 1/2 is newly developed as a second-generation device, if D is close to 1/2 in the above formula, it can be interpreted that the prototype device is normally assembled. When converting the normalized signal S into a measured particle size, an inverse function of Formula 8 is used. Specifically, the following Formula 8' is obtained. A form in which $d_0$ is moved to the right side is the following Formula 8".

[Math. 8]

$$S = A \cdot \left(1 - exp\left(-\frac{d - d_0}{D}\right)\right) \quad \text{(Formula 8)}$$

$$d - d_0 = -log\left(1 - \frac{S}{A}\right) \cdot D \quad \text{(Formula 8')}$$

$$d = d_0 - log\left(1 - \frac{S}{A}\right) \cdot D \quad \text{(Formula 8")}$$

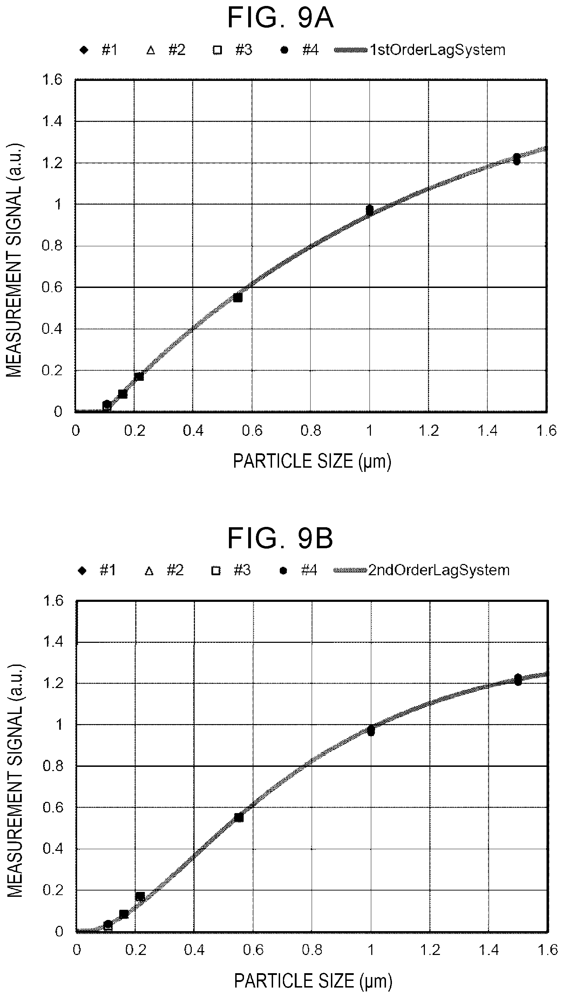

FIG. 9A shows a result of a first-order lag system model among application results of a size conversion model using an exponential function of the invention. In the drawing, plots indicate experimental results of various conditions of the above-described four devices, and a curve indicates a result of the size conversion model. As can be seen in the drawing, the size conversion model and the experimental results well match. This is due to the effect of the normalized signal provided by the invention and the introduction of the measurement size lower limit that models the influence of Rayleigh scattering. Since this model is a transcendental function expression, when the model is implemented in hardware such as an FPGA, the circuit scale and power consumption increase, but when the model is processed by a general CPU in which a numerical operation processor is built, an increase of the calculation time is small.

(2) Second-order Lag System Model

To facilitate understanding, a model representing the normalized signal S obtained when the particle size d is given is shown in Formula 9. $d_0$ (> 0) represents a measurement size lower limit due to the influence of Rayleigh scattering, D (> 0) represents a light spot size constant representing saturation of the normalized signal by the size of a light spot, and A (> 0) represents a constant representing the magnitude of a saturation signal. When converting the normalized signal S into a measured particle size, an inverse function of Formula 9 is used. Specifically, the following Formula 9' is obtained. A form in which $d_0$ is moved to the right side is the following Formula 9".

[Math. 9]

$$S = A \cdot \left(1 - exp\left(-\frac{d-d_0}{D}\right)\right)^2 \qquad \text{(Formula 9)}$$

$$d - d_0 = -log\left(1 - \left(\frac{S}{A}\right)^{\frac{1}{2}}\right) \cdot D \qquad \text{(Formula 9')}$$

$$d = d_0 - log\left(1 - \left(\frac{S}{A}\right)^{\frac{1}{2}}\right) \cdot D \qquad \text{(Formula 9'')}$$

FIG. 9B shows a result of a second-order lag system model among the application results of the size conversion model using the exponential function formula of the invention. In the drawing, plots indicate experimental results of various conditions of the above-described four devices, and a curve indicates a result of the size conversion model. As can be seen in the drawing, the size conversion model and the experimental results well match. Comparing FIG. 9A with the curve representing the model, it can be seen that a rising region where the particle size is 0.2 $\mu$m or less has a smooth change. This is a characteristic suitable for a device having a high S/N ratio with reduced laser noise. At the same time, it can be seen that the saturation effect of the normalized signal in a region where the particle size is 1 $\mu$m or more is increased. This is a characteristic suitable for detecting large-sized particles. Since this model is a transcendental function expression, when the model is implemented in hardware such as an FPGA, the circuit scale and power consumption increase, but when the model is processed by a general CPU in which a numerical operation processor is built, an increase of the calculation time is small.

(3) Gaussian Distribution Model

To facilitate understanding, a model representing the normalized signal S obtained when the particle size d is given is shown in Formula 10. $d_0$ (> 0) represents a measurement size lower limit due to the influence of Rayleigh scattering, D (> 0) represents a light spot size constant representing saturation of the normalized signal by the size of a light spot, and A (> 0) represents a constant representing the magnitude of a saturation signal. When converting the normalized signal S into a measured particle size, an inverse function of Formula 10 is used. Specifically, the following Formula 10' is used. A form in which $d_0$ is moved to the right side is the following Formula 10".

[Math. 10]

$$S = A \cdot \left(1 - exp\left(-\left(\frac{d-d_0}{D}\right)^2\right)\right) \qquad \text{(Formula 10)}$$

$$d - d_0 = \sqrt{-log\left(1 - \frac{S}{A}\right)} \cdot D \qquad \text{(Formula 10')}$$

$$d = d_0 + \sqrt{-log\left(1 - \frac{S}{A}\right)} \cdot D \qquad \text{(Formula 10'')}$$

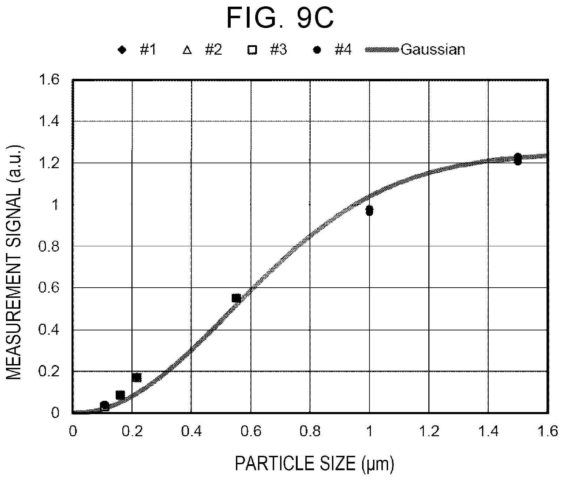

FIG. 9C shows a result of a Gaussian distribution model among the application results of the size conversion model using the exponential function of the invention. In the drawing, plots indicate experimental results of various conditions of the above-described four devices, and a curve indicates a result of the size conversion model. As can be seen in the drawing, the size conversion model and the experimental results substantially match. It can be seen that the error is larger as a whole than in FIGS. 9A and 9B. In addition, a rising region where the particle size is 0.2 $\mu$m or less further changed smoothly, which is a characteristic suitable for a device having a high S/N ratio in which laser noise is reduced. At the same time, it can be seen that the saturation effect of the normalized signal in a region where the particle size is 1 $\mu$m or more is further increased. This is a characteristic suitable for detecting large-sized particles. Since this model is a transcendental function expression, when the model is implemented in hardware such as an FPGA, the circuit scale and power consumption increase, but when the model is processed by a general CPU in which a numerical operation processor is built, an increase of the calculation time is small.

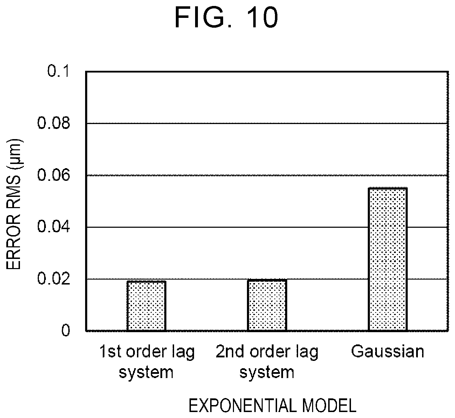

FIG. 10 shows an experimental result showing a relationship between the size conversion model based on the exponential function formula of the invention and the RMS error of the converted particle size, and summarizes the results shown in FIGS. 9A to 9C. As can be seen in the drawing, the RMS errors of the first-order lag system model and the second-order lag system model are substantially equal to each other and are about 0.02 $\mu$m, and the RMS error of the Gaussian distribution model is slightly large and is about 0.055 $\mu$m. When utilizing the technique disclosed in the invention, it is possible to appropriately select a model that meets specifications in consideration of the RMS error (= measurement accuracy) shown here, the above-described rising region, a saturation characteristic, and the like.

The three size conversion models based on exponential function formulas have been exemplified above. The invention is not limited thereto, and is also applicable to a size conversion model combined with a higher-order exponential function formula or a polynomial model described above. In this case, by evaluating the RMS error or the like of the particle size converted from the normalized signal based on the model formula in the same procedure as that shown here, a model suitable for the calculation amount or the accuracy specification can be appropriately used.

<Embodiment 5: Comparison of Size Measurement Accuracy between Invention and Related Art>

Embodiment 5 of the invention summarizes the improvement in the size measurement accuracy according to the invention. Here, as a size conversion model in the related art, a model in which the normalized signal and the particle size are proportional to each other from the result illustrated in FIG. 17 of PTL 1 is used. The model formula is as follows. d represents a particle size, S represents a normalized signal, and $c_1$ represents a proportionality coefficient. As compared with Formula 7A, a difference from the invention is that there is no measurement size lower limit $d_0$ representing the characteristic change of the Rayleigh scattering region.

[Math. 11]

$$d = c_1\, S \qquad \text{(Formula 11)}$$

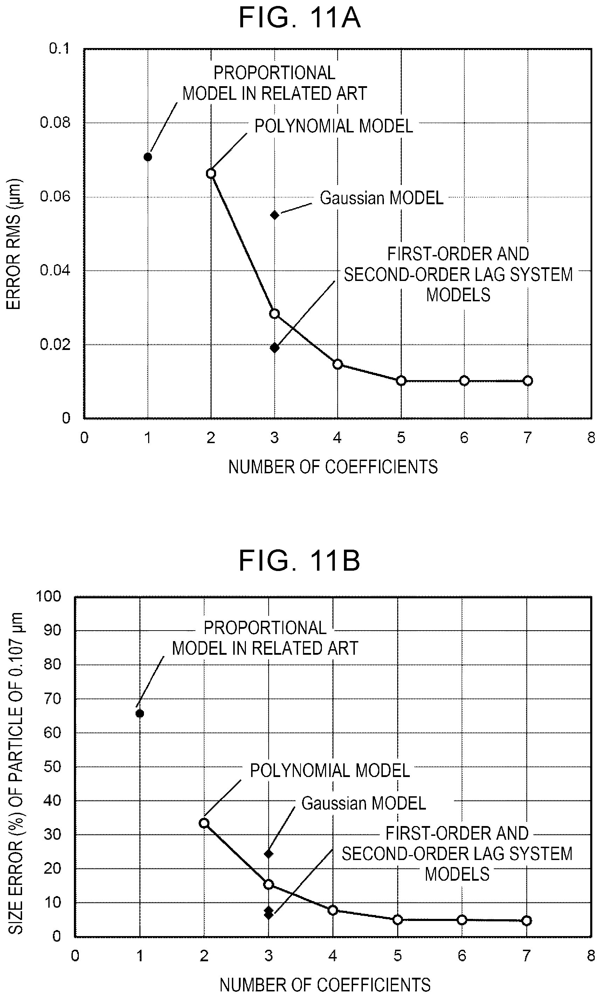

FIG. 11A shows RMS errors of particle sizes measured by the related art and the invention. A horizontal axis of the drawing is the number of parameters, the number of parameters = 1 in the related art, the number of parameters = order + 1 in the polynomial model, and the number of parameters = 3 in the exponential function model. As can be seen in the drawing, the RMS error is about 0.07 $\mu$m or less in each model, and the measurement accuracy of the particle size in a submicron region is reasonable. The first-order polynomial (the number of parameters = 2) of the invention has an RMS error substantially equal to that of the related art. It can be seen that the effect of the invention is more remarkable in the polynomial model and the exponential function model of second or higher order, and the RMS error is improved to about 0.01 $\mu$m at minimum.

FIG. 11B shows a result of comparing a relative error of a measured size obtained by the size conversion model for 0.107 $\mu$m (the minimum size shown in FIG. 6A) between the related art and the invention. As described above, one of the main objects of the invention is to cope with the particle size and the characteristic change of the detection signal in the Rayleigh scattering region. As can be seen in the drawing, in the case of the related art, the size measurement error is about 67%. On the other hand, in the size conversion model of the invention, the error is greatly improved to about 34% or less. In order to reduce the size measurement error of the particle of about 0.1 $\mu$m to 10% or less, the polynomial model (order $\geq$ 3) having four or more parameters and the exponential function models of the first-order lag system and the second-order lag system are suitable. The results shown here are based on the wavelength (= 0.785 $\mu$m) and the objective lens (numerical aperture = 0.45) of the four prepared devices. When utilizing the technique disclosed in the invention, it is possible to appropriately select a model that meets the specifications in consideration of the evaluation method of the size conversion model shown here.

<Embodiments 1 to 5: Supplement of Calibration Work>

In the above embodiments, d0 is fixed depending on the model of the particle measuring device, and it is not necessary to consider the tool-to-tool variation for d0. If the device whose background scattering measured using the reference sample falls outside a predetermined range, this indicates that there is an abnormality in the device implementation, such as stray light or laser noise, and the device can be shipped after appropriate measures such as readjustment of the optical system are taken. In addition, it is also possible to simplify the calibration work by applying the same size conversion model to a device in which the background scattering is in the predetermined range.

<Embodiment 6: Appropriate Range of Value of Measurement Size Lower Limit $d_0$ in Invention>

In Embodiment 6 of the invention, an appropriate numerical range of the measurement size lower limit $d_0$, which is a parameter representing the characteristic change of the detection signal of the Rayleigh scattering region disclosed in the above embodiments, will be described. As is well known, in Rayleigh scattering and Mie scattering, a scattering characteristic is determined by a value obtained by dividing a particle size by a wavelength. Here, an appropriate numerical range of $d_0/\lambda$ ($\lambda$ is the wavelength of the light source) will be described in consideration of the selection of the light source wavelength of the device.

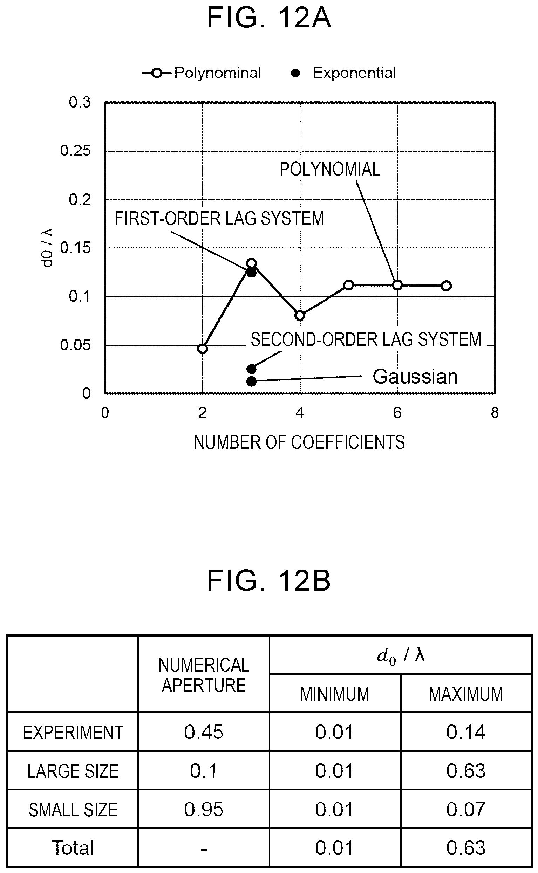

FIG. 12A is an experimental result showing a relationship between the $d_0/\lambda$ value and a parameter of the size conversion model. The wavelength of the light source of the four prepared devices is 0.785 $\mu$m, and the numerical aperture of the objective lens is 0.45. As can be seen in the drawing, $d_0/\lambda$ is in a range of 0.01 to 0.14.

FIG. 12B is a numerical table showing an appropriate range of the $d_0/\lambda$ value in consideration of a case where the range of the particle size to be measured is changed by selecting the numerical aperture of the objective lens based on experimental results. Experimental conditions shown in the table are as above.

A minimum value of the $d_0/\lambda$ value is mainly determined by Rayleigh scattering, and it is appropriate to set 0.01 as the minimum value as shown in the table.

A maximum value of the $d_0/\lambda$ value may be considered to increase or decrease in proportion to the light spot size. It is known that the light spot size is proportional to 1/numerical aperture. When a particle size distribution of a large size (about 1 $\mu$m to 30 $\mu$m) is measured using the technique of the invention, the numerical aperture of the objective lens may be selected to be about 0.1. In this case, the light spot size is 4.5 times the experimental condition, and the maximum value of the $d_0/\lambda$ value is 0.63. On the other hand, when a particle size distribution of a small size (about 0.03 $\mu$m to 1 $\mu$m) is measured using the technique of the invention, the numerical aperture of the objective lens may be selected to be about 0.95. In this case, the light spot size is 0.47 times the experimental condition, and the maximum value of the $d_0/\lambda$ value is 0.07.

As described above, in the size conversion model provided by the invention, when the parameter representing the measurement size lower limit is $d_0$ and the wavelength of the light source is $\lambda$, the appropriate numerical range of $d_0/\lambda$ is 0.01 to 0.63.

<Embodiment 7: Particle Measuring Device>

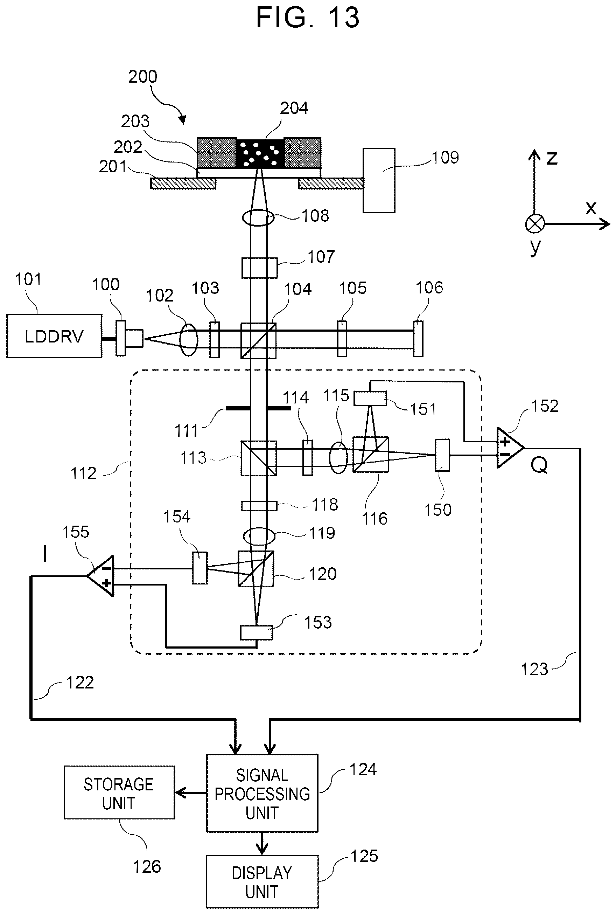

FIG. 13 shows an example of a configuration diagram of a particle measuring device according to Embodiment 7 of the invention. Laser light emitted from a light source 100 whose light emission state is controlled by a laser driver 101 that controls radio frequency superimposition and emission power is converted into parallel light by a collimator lens 102, a polarization direction is adjusted by a $\lambda/2$ plate 103 whose optic axis is set to about 22.5 degrees with respect to a horizontal direction, and then the laser light is separated into signal light and reference light by a polarized beam splitter 104.

After the reference light is converted into a circular polarized state by a $\lambda/4$ plate 105, the reference light is reflected by a reference light mirror 106, reflected light is brought into a polarized state in which polarized light is rotated by 90 degrees from an outward path by the $\lambda/4$ plate 105, and the polarized light is reflected by the polarized beam splitter 104. A traveling direction of the signal light is deflected by a composite deflection element 107 in an XY direction, and then the signal light is converted into a circular polarized state by an action of a built-in $\lambda/4$ plate, and is focused in a sample 204 held in a sample container 200 by an objective lens 108. A drive mechanism 109 that moves the sample in a Z axis direction has a function of scanning a focal position of the signal light along the Z axis direction (optic axis direction). A component of the signal light reflected from an individual particle contained in the sample 204 is deflected in a direction same as an outward path by the composite deflection element 107 in the XY direction, the signal light becomes circular due to the action of the built-in $\lambda/4$ plate and is brought into a polarized state in which polarized light is rotated by 90 degrees from an outward path, and polarized light is transmitted through the polarized beam splitter 104. Here, the sample container 200 holds the sample 204 in a well and guides the signal light into the sample through a transparent window 202. 203 is a resin member that forms the well of the sample container. A base plate 201 is in contact with the transparent window 202 to mechanically hold the sample container 200 and is responsible for stabilizing the temperature of the sample.

The signal light and the reference light are multiplexed by the polarized beam splitter 104, guided to a detection optical system 112, and split into transmitted light and reflected light by a half beam splitter 113 via a pinhole 111.

The reflected light is transmitted through a $\lambda/4$ plate 114 whose optic axis is set to about 45 degrees with respect to the horizontal direction, then the transmitted light is converged by a condensing lens 115 and is split into two by a polarized beam splitter 116, the split light beams are converted into electric signals by respective photodetectors 150 and 151, and the electric signals are differentially amplified by a current differential amplifier 152 to become a detection signal 123.

The transmitted light is transmitted through a $\lambda/2$ plate 118 whose optic axis is set to about 22.5 degrees with respect to the horizontal direction, then the transmitted light is converged by a condensing lens 119 and is split into two by a polarized beam splitter 120, the split light beams are converted into electric signals by respective photodetectors 153 and 154, and the electric signals are differentially amplified by a current differential amplifier 155 to become a detection signal 122.

The detection optical system 112 shown here constitutes a homodyne phase diversity method, and the real part component 122 and the imaginary part component 123 of the detection signal are electric signals corresponding to a real part and an imaginary part of the electric field amplitude of the signal light reflected from the individual particles contained in the sample 204. The detection signal is calculated by a signal processing unit 124 as a numerical value obtained by calculating the square sum of the components and then calculating the square root.

The signal processing unit 124 combines acquired time-series data of the detection signal to form three-dimensional image data in XYZ directions in the sample, separates and tracks data of individual particles included in the three-dimensional image data, and calculates the maximum value of the detection signal obtained under a focusing condition for each particle. The signal processing unit 124 further calculates the reference signal and the normalized signal according to the flows shown in FIGS. 3 and 5 and (Formula 1) to (Formula 5). Finally, the signal processing unit 124 obtains the particle size from the normalized signal using the size conversion model shown in Embodiments 3 and 4 of the invention, organizes the size into a graph, a numerical table, or the like, and presents the result to the user.

As an implementation form of the signal processing unit 124 in the drawing, the signal processing unit 124 is implemented by an embedded microcomputer built in the device or a computer that is disposed outside the device and can exchange necessary signals by an interface board or the like. When processing items of the signal processing unit 124 have temporal or power restrictions, a dedicated processing circuit implemented by an auxiliary FPGA or the like may be used as the auxiliary computing unit.

A storage unit 126 can store, for example, a value obtained by measuring the measurement lower limit value d0 in advance for each individual particle measuring device. The signal processing unit 124 can calculate the particle size d by the method described in the above embodiments using d0 stored in the storage unit 126.

<Regarding Modifications of Invention>

The invention is not limited to the above-described embodiments and includes various modifications. For example, the above-described embodiments have been described in detail to facilitate understanding of the invention, and the invention is not necessarily limited to those including all the configurations described above. A part of a configuration according to a certain embodiment can be replaced with a configuration according to another embodiment, and a configuration according to another embodiment can be added to a configuration according to a certain embodiment. In addition, another configuration can be added to, deleted from, or replaced with a part of a configuration of each embodiment.

In the above embodiments, the signal processing unit 124 may be built in the particle measuring device, or the particle measuring device may acquire only data describing a result of measuring a sample, and the signal processing unit 124 may be arranged outside the particle measuring device to receive the data. In any case, the configuration of the particle measuring device according to the invention is the same as that described in the above embodiments.

Reference Signs List

    100: light source
    101: laser driver having high-frequency superimposing function
    108: objective lens
    109: drive mechanism for sample container
    112: detection optical system
    124: signal processing unit
    200: sample container
    201: base plate
    202: transparent window
    203: resin member for forming well

**Claims**

**1.** A particle measuring device for measuring a size of a particle contained in a sample of a liquid, the particle measuring device comprising:

a light source configured to emit light;
a branching unit configured to branch the light from the light source into signal light and reference light;
an irradiation unit configured to condense the signal light and irradiate the sample with the condensed signal light;
a detection unit configured to detect an interference signal obtained by causing reflected light from the particle and the reference light to interfere with each other; and
a processing unit configured to measure the size of the particle using the interference signal, wherein
the processing unit acquires a normalized signal S obtained by dividing a maximum value of the interference signal detected by the detection unit by a reference value, and
the processing unit measures the size of the particle using a function describing a relationship between S and (d - d0), where d is the size of the particle, and d0 is a lower limit value of the size of the particle at which the interference signal is equal to or less than a signal level of background scattering caused by the liquid.

2.  The particle measuring device according to claim 1, wherein
the function is configured to connect a portion of the interference signal generated by Mie scattering of the particle and a portion of the interference signal generated by Rayleigh scattering, in a range equal to or larger than the lower limit value in plots of the interference signal and the size.

3.  The particle measuring device according to claim 1, wherein the function is a polynomial function or an exponential function.

4.  The particle measuring device according to claim 1, wherein

the function is expressed by the following formula,

[Math. 1]

$$d - d_0 = \sum_{n=1}^{N} c_n \, S^n$$

,

where N is a natural number and Cn is a constant.

5.  The particle measuring device according to claim 1, wherein

the function is expressed by the following formula,

[Math. 2]

$$S = A \cdot \left( 1 - exp\left( -\frac{d - d_0}{D} \right) \right)$$

OR

$$S = A \cdot \left( 1 - exp\left( -\frac{d - d_0}{D} \right) \right)^2$$

OR

$$S = A \cdot \left( 1 - exp\left( -\left(\frac{d - d_0}{D}\right)^2 \right) \right),$$

where A and D are positive constants.

6. The particle measuring device according to claim 1, wherein
the reference value is a value calculated using at least

a sensitivity constant $\alpha$ unique to the device obtained from a result of measuring a reference sample under a predetermined standard condition,
a correction value $\eta$ representing an influence of light emission power or temperature,
Fresnel reflectance R of a particle in the reference sample, and
Fresnel reflectance r of the particle contained in the sample.

7. The particle measuring device according to claim 1, wherein
the processing unit measures a size of the particle of 0.2 $\mu$m or less.

8. The particle measuring device according to claim 1, further comprising:

a storage unit configured to store the lower limit value d0, wherein
the processing unit measures the size of the particle using the lower limit value d0 stored in the storage unit.

9. The particle measuring device according to claim 1, wherein
a value obtained by dividing the lower limit value by a wavelength of the light is 0.01 to 0.63.

10. The particle measuring device according to claim 1, wherein
the processing unit is implemented by at least one of

an arithmetic device built in the particle measuring device, or
an arithmetic device disposed outside the particle measuring device and configured to acquire the interference signal from the detection unit.

11. A particle measuring method for measuring a size of a particle contained in a sample of a liquid, the particle measuring method comprising:

a step of emitting light;
a step of branching the light into signal light and reference light;
a step of condensing the signal light and irradiating the sample with the condensed signal light;
a step of detecting an interference signal obtained by causing reflected light from the particle and the reference light to interfere with each other; and

a step of measuring the size of the particle using the interference signal, wherein

in the measuring step, a normalized signal S obtained by dividing a maximum value of the interference signal detected in the detecting step by a reference value is acquired, and

in the measuring step, the size of the particle is measured using a function describing a relationship between S and (d - d0) where d is the size of the particle and d0 is a lower limit value of the size of the particle at which the interference signal is equal to or less than a signal level of background scattering caused by the liquid.

# FIG. 1

(DEFOCUS)

(FOCUS)

PARTICLE

FOCAL POINT

PARTICLE

SPOT SIZE

FOCAL POINT

LENS

## FIG. 2A

## FIG. 2B

# FIG. 2C

# FIG. 3

Start

| S301 | PREPARE REFERENCE SAMPLE CONTAINING REFERENCE PARTICLE |
|------|-----------------------|

| S302 | SET DEVICE TO STANDARD CONDITION |
|------|-----------------------|

| S303 | MEASURE REFERENCE SAMPLE |
|------|-----------------------|

| S304 | CALCULATE CONSTANT α UNIQUE TO DEVICE AS MAGNITUDE OF DETECTION SIGNAL PER 1 μm |
|------|-----------------------|

End

# FIG. 4

# FIG. 5

```
                    ( Start )
                        │
                        ▼
S501    ┌─────────────────────────────────────────────┐
        │ CALCULATE SENSITIVITY CORRECTION COEFFICIENT η │
        │   OF SELECTED POWER ACCORDING TO FORMULA 5    │
        └─────────────────────────────────────────────┘
                        │
                        ▼
S502    ┌─────────────────────────────────────────────┐
        │        CALCULATE AMPLITUDE REFLECTANCE OF     │
        │  MEASUREMENT SAMPLE ACCORDING TO FORMULA 3    │
        └─────────────────────────────────────────────┘
                        │
                        ▼
S503    ┌─────────────────────────────────────────────┐
        │        CALCULATE REFERENCE SIGNAL $s_0$        │
        │           ACCORDING TO FORMULA 2             │
        └─────────────────────────────────────────────┘
                        │
                        ▼
S504    ┌─────────────────────────────────────────────┐
        │              SET DEVICE SETTING              │
        └─────────────────────────────────────────────┘
                        │
                        ▼
S505    ┌─────────────────────────────────────────────┐
        │      OBTAIN SIGNAL s BY MEASURING SAMPLE      │
        └─────────────────────────────────────────────┘
                        │
                        ▼
S506    ┌─────────────────────────────────────────────┐
        │          CALCULATE NORMALIZED SIGNAL S        │
        │           ACCORDING TO FORMULA 1             │
        └─────────────────────────────────────────────┘
                        │
                        ▼
                    ( End )
```

# FIG. 6A

# FIG. 6B

# FIG. 7A

# FIG. 7B

# FIG. 7C

# FIG. 7D

# FIG. 7E

◆ #1   △ #2   □ #3   ● #4   ▬▬Poly_5

# FIG. 7F

◆ #1   △ #2   □ #3   ● #4   ▬▬Poly_6

# FIG. 8

# FIG. 9A

◆ #1    △ #2    ◻ #3    ● #4    ▬▬1stOrderLagSystem

MEASUREMENT SIGNAL (a.u.) vs PARTICLE SIZE (μm)

# FIG. 9B

◆ #1    △ #2    ◻ #3    ● #4    ▬▬2ndOrderLagSystem

MEASUREMENT SIGNAL (a.u.) vs PARTICLE SIZE (μm)

# FIG. 9C

# FIG. 10

# FIG. 11A

# FIG. 11B

# FIG. 12A

−O− Polynominal     ● Exponential

POLYNOMIAL

FIRST-ORDER LAG SYSTEM

SECOND-ORDER LAG SYSTEM

Gaussian

$d0 / \lambda$

NUMBER OF COEFFICIENTS

# FIG. 12B

| | NUMERICAL APERTURE | $d_0 / \lambda$ | |
|---|---|---|---|
| | | MINIMUM | MAXIMUM |
| EXPERIMENT | 0.45 | 0.01 | 0.14 |
| LARGE SIZE | 0.1 | 0.01 | 0.63 |
| SMALL SIZE | 0.95 | 0.01 | 0.07 |
| Total | - | 0.01 | 0.63 |

# FIG. 13

## INTERNATIONAL SEARCH REPORT

| International application No. |
| --- |
| **PCT/JP2024/033512** |

**A. CLASSIFICATION OF SUBJECT MATTER**

*G01N 15/0227*(2024.01)i
FI: G01N15/0227 110

According to International Patent Classification (IPC) or to both national classification and IPC

**B. FIELDS SEARCHED**

Minimum documentation searched (classification system followed by classification symbols)

G01N15/00-G01N15/1492

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-102032 A (HITACHI-LG DATA STORAGE INC.) 08 June 2017 (2017-06-08) entire text, all drawings | 1-11 |
| A | WO 2023/083433 A1 (MAX-PLANCK-GESELLSCHAFT ZUR FORDERUNG DER WISSENSCHAFTEN E. V.) 19 May 2023 (2023-05-19) entire text, all drawings | 1-11 |
| A | JP 2014-521967 A (NANOSIGHT LIMITED) 28 August 2014 (2014-08-28) entire text, all drawings | 1-11 |
| A | WO 2020/144754 A1 (HITACHI HIGH-TECH CORPORATION) 16 July 2020 (2020-07-16) entire text, all drawings | 1-11 |
| A | WO 2020/054690 A1 (OMRON CORPORATION) 19 March 2020 (2020-03-19) entire text, all drawings | 1-11 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **22 November 2024** | **03 December 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/033512**

| Patent document cited in search report | | | Publication date (day/month/year) | Patent family member(s) | | | Publication date (day/month/year) |
|---|---|---|---|---|---|---|---|
| JP | 2017-102032 | A | 08 June 2017 | US | 2017/0160185 | A1 | |
| | | | | entire text, all drawings | | | |
| WO | 2023/083433 | A1 | 19 May 2023 | CN | 118251588 | A | |
| JP | 2014-521967 | A | 28 August 2014 | US | 2014/0152978 | A1 | |
| | | | | entire text, all drawings | | | |
| | | | | WO | 2013/021185 | A1 | |
| WO | 2020/144754 | A1 | 16 July 2020 | US | 2022/0065766 | A1 | |
| | | | | entire text, all drawings | | | |
| WO | 2020/054690 | A1 | 19 March 2020 | JP | 2020-41906 | A | |

Form PCT/ISA/210 (patent family annex) (July 2022)

**REFERENCES CITED IN THE DESCRIPTION**

**Patent documents cited in the description**

- JP 2017102032 A
- WO 2020144754 A
- JP 2015049204 A